# EUROPEAN PATENT SPECIFICATION

(11) **EP 0 804 783 B1**
(45) Date of publication and mention of the grant of the patent: **18.12.2002**
(21) Application number: 94929842.6
(22) Date of filing: 29.09.1994
(51) Int. Cl.: G06F 3/00

(54) **METHOD AND APPARATUS FOR DISPLAYING A VIRTUAL WORLD**
VERFAHREN UND EINRICHTUNG ZUR ANZEIGE EINER VIRTUELLEN WELT
PROCEDE ET APPAREIL POUR VISUALISER UN MONDE VIRTUEL

(30) Priority: 29.09.1993 US 128112
(43) Date of publication of application: 05.11.1997
(73) Proprietor: SUN MICROSYSTEMS, INC., Palo Alto, California 94303 (US)
(72) Inventor: LANIER, Jaron, Z., Sausalito, CA 94966 (US)
(74) Representative: Harris, Ian Richard
(86) International application number: US9410590
(87) International publication number: WO95009411

(56) References cited:
- EP-A- 0 502 643
- WO-A-92/09984
- US-A- 4 807 202
- US-A- 4 984 179
- US-A- 5 177 872

## Description

### BACKGROUND OF THE INVENTION

This invention relates to virtual reality systems and, more particularly, to an apparatus for displaying a virtual world.

Virtual reality systems use computers and peripheral devices to enable users to perceive and interact with computer generated worlds. In a typical virtual reality system, a user wears garments outfitted with devices which provide information about the position and orientation of the user relative to a fixed reference point. The information is used by the computer system to create a virtual being, wherein the virtual being emulates the position, orientation, and movements of the user. The database also includes a virtual environment in which the virtual being exists, and the virtual being may act upon virtual objects in the virtual world in a manner which emulates the actions of the user. For example, the virtual being may pick up a virtual ball and throw it, or the virtual being may use a virtual knife to cut a virtual steak.

To allow the user to perceive the virtual world and the actions his or her virtual being within it, the computer animates the virtual world together with the virtual being and projects the virtual world from the viewpoint of the virtual being onto a head-mounted display. As the user moves around, his or her actions are sensed by the instrumented garment and used by the computer to alter the position and orientation of the virtual being within the virtual world. The displayed image is also modified to follow the viewpoint of the virtual being so that the user is led to believe he or she actually exists in the virtual world. Thus, a user may lower his or her head and look underneath a virtual table, or the user may walk over to a virtual light switch and, by appropriate movements of the user's hand, turn the switch on and off.

An important feature in any virtual reality system is the ability to animate and display the virtual world in a manner which makes the user believe he or she actually exists within the virtual world. For example, the displayed image must realistically translate and rotate as the user's head translates and rotates. Consequently, virtual worlds are usually rendered using a database which stores data for all three dimensions for every structure in the virtual world, and the structures are positioned, translated and rotated accordingly. Unfortunately, translation and rotation of structures in three-dimensional space, assignment of pixel values to correspond with the three dimensional view, and generation of the image on the head mounted display in real time requires substantial computing resources. This makes virtual reality systems very expensive and beyond the general consumer market. Examples of such prior art are disclosed in EP-A-0 502 643, WO-A-9209984 and US-A-4984179.

### SUMMARY OF THE INVENTION

According to a first aspect of the invention there is disclosed an apparatus for displaying a virtual world comprising:
image storing means for storing image data representing an image having only two dimensions and which extends along only first and second generally perpendicular image axes;
movement measuring means for measuring movement of a body part of a user and generating corresponding user data;
a display screen mounted for movement with the user's head in front of at least one of the user's eyes; and
image generating means, electrically coupled to the image storing means, to the movement measuring means, and to the display screen, for generating an image to be displayed on the display screen by determining a portion of the image data stored in the image storage means to be displayed using the user data which varies only in two dimensions measured by the movement measuring means.

According to a second aspect of the invention there is disclosed a method for displaying a virtual world comprising the steps of:
storing image data representing an image having only two dimensions and which extends along only first and second generally perpendicular image axes;
measuring movement of a body part of a user and generating corresponding user data;
mounting a display screen for movement with the user's head in front of at least one of the user's eyes; and
generating an image on the display screen by determining a portion of the image data stored by the storing image data step which is to be displayed using the user data which varies only in two dimensions measured by the measuring step.

In one embodiment of the present invention, a database stores image data corresponding to an image which extends along first and second generally perpendicular image axes. A display device is mounted for movement with the user's head in proximity to the user's eye, and an image generating circuit generates a subportion of the image on the display device using coordinate data which varies only for the first and second image axes. A movement measuring circuit measures movement of a user's body part, such as the user's head, and, as the user moves (e.g., rotates his or her head), the image displayed is translated along one of the first or second image axes by an amount proportional to the amount of movement. For example, if the user rotates his or her head about a vertical axis, the displayed image translates along the horizontal axis. The begin and end points of the image are logically coupled for forming a continuous 360° image. Thus, if the user rotates his or her head in a circle, he or she will view a continuous "cylindrical" world. The cylindrical world adequately simulates a three-dimensional virtual world, but without complicated and expensive three-dimensional graphics processing.

In the preferred embodiment, the display device comprises first and second display screens, one for each eye. The image displayed to one eye is offset by the image displayed to the other eye for providing a sense of depth. Multiple images may be superimposed on each other, each having a different offset, to further simulate a three dimensional environment.

The movement measuring circuit may comprise a plurality of radiation emitters disposed about the person's body part and a sensor disposed at a fixed reference point which detects the identity of the radiation emitters and/or the intensity of radiation emitted by each emitter. As the user rotates his or her body part, the sensor detects radiation from whichever radiation emitter is within view. The identity of the radiation emitters from which radiation is sensed may be used to calculate the rotational position and/or velocity of the user's body part. This data, in turn, may be used for translating the image on the display. Alternatively, a plurality of sensors may encircle the user's body part for sensing radiation emitted from a single radiation emitter. The identity of the sensors which receive radiation and/or the intensity of radiation received by the various sensors may be used to calculate the position and rotational velocity of the user's body part.

### BRIEF DESCRIPTION OF THE DRAWINGS

Figure 1 is a diagram of portions of a virtual reality system including a particular embodiment of an apparatus according to the present invention for displaying a virtual world;
Figure 2 is a diagram of a particular embodiment of a two dimensional image displayed by the apparatus of Figure 1;
Figure 3 is a diagram showing how a portion of the image of Figure 2 is generated using graphical characters;
Figure 4 is a diagram showing how the virtual world is displayed to the user as a single cylinder;
Figure 5 is a diagram showing how the virtual world is displayed to each of the user's eyes;
Figure 6 is a diagram showing how the apparatus according to the present invention displays a virtual world comprising a plurality of superimposed cylinders;
Figures 7A, 7B, 8A, 8B, 8C, 9A and 9B are diagrams showing particular embodiments of movement measuring circuits according to the present invention.

### DETAILED DESCRIPTION OF THE PREFERRED EMBODIMENTS

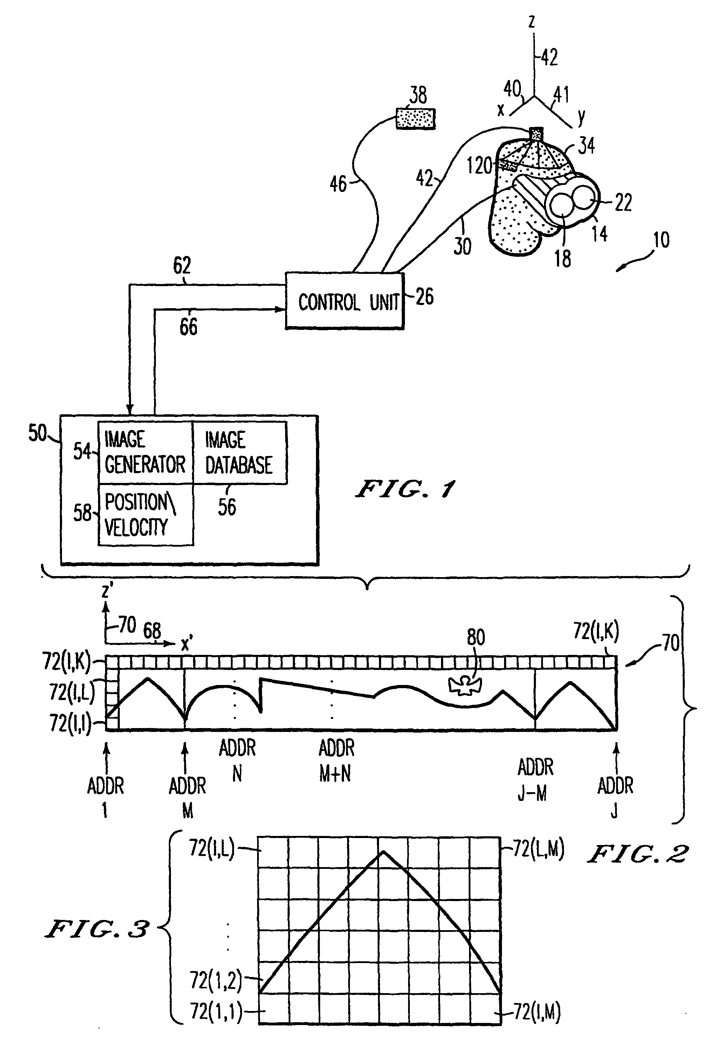

Figure 1 is a diagram of relevant portions of a virtual reality system 10 which incorporates features of the present invention. Virtual reality system 10 includes a head mounted display 14 for displaying images of a virtual world, position/tilt headgear 34 and a sensor 38 for providing data used for measuring the rotational position and velocity of the user's head about a horizontal X-axis 40 and a vertical Z-axis 42, a processor 50 for rendering the images in accordance with the data from headgear 34 and sensor 38, and a control unit 26 for interfacing head mounted display 14, headgear 34 and sensor 38 to processor 50. Head mounted display 14 is coupled to control unit 26 through a communication path 30, headgear 34 is coupled to control unit 26 through a communication path 42, sensor 38 is coupled to control unit 26 through a communication path 46, and control unit 26 is coupled to processor 50 through communication paths 62 and 66.

Head mounted display 14 includes display screens 18 and 22 disposed in front of the user's eyes for displaying separate but overlapping images of the virtual world to each eye. Processor 50 includes an image generator 54, an image database 56, and a position/velocity calculating circuit 58. Position/velocity calculating circuit 58 receives the data from headgear 34 and sensor 38 through communication path 62 and calculates the rotational position and velocity of the user's head about axes 40 and 42. Image generator 54 uses the position and velocity calculations from position/velocity calculating circuit 58 in conjunction with the image data stored in image database 56 to render portions of the image which then may be communicated to control unit 26 through communication path 66 and thereafter to head mounted display 14 through communication path 30.

Figure 2 is a diagram showing a particular embodiment of an image 70 which may be stored in image data base 56. Image 70 extends along a horizontal X' axis 68 and a vertical Z' axis 70 as shown. In this embodiment, image 70 comprises a plurality of multi-pixel blocks of graphical characters 72(1,1) through 72(J,K), and the graphical characters extend from an address ADDR-1 to an address ADDR-K. Of course, the graphical characters need not be stored in contiguous physical locations within image data base 56 as long as the appropriate address pointers are capable of grouping the graphical characters together to form each displayed frame. Furthermore, there is not necessarily a one-to-one correspondence between the address number and the character number. The numbers used herein are for convenience in understanding only.

Image database also stores "sprites," such as sprite 80, which may be superimposed on image 70 in any desired location. Unlike image 70, sprites ordinarily comprise bitmapped images rather than graphical characters, and they may be superimposed on image 70 at any pixel location (ie., they need not be placed at character boundaries).

In this embodiment, M horizontal graphical characters and L vertical graphical characters comprise each displayed frame, where typically L<<K and M<<J. See Fig. 3. As the user rotates his or her head about X axis 40 and/or Z axis 42, the portions of the image displayed on display screens 18 and 22 change accordingly. Thus, as the user rotates his or her head about Z axis 42, image generator 54 may initially display the image located between addresses ADDR-1 and ADDR-M and then scroll to the image located between addresses ADDR-N and ADDR-(M+N). Preferably, the scrolling velocity is proportional to the rotational velocity of the user's head about the relevant axis.

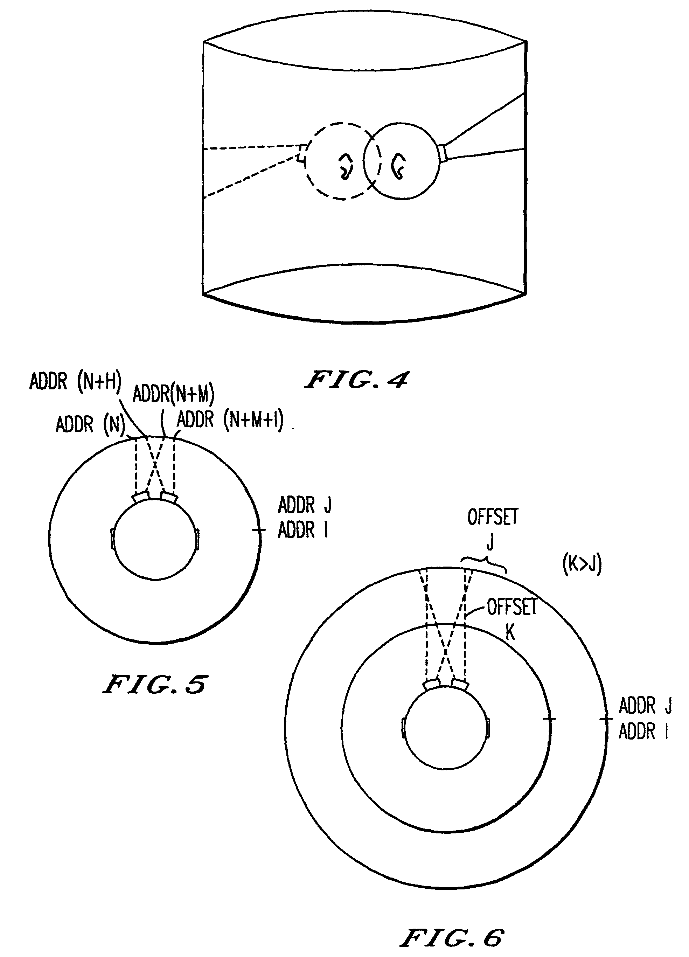

Since the user may rotate his or her head more than 360°, it is necessary to accommodate this rotation by logically coupling the beginning address of the image (ADDR-1) to the end address of the image (ADDR-K) so that image generator renders a continuous "cylindrical" image as shown in Figs. 4-6. In this embodiment, the image at ADDR-1 through ADDR-M and ADDR-(J-M) through ADDR-J are duplicated. As the user rotates his or her head, e.g., clockwise about Z axis 42, the address pointer for image generator 54 increments until it reaches ADDR(J-M). At that time the address pointer value switches to ADDR(1), thus simulating the continuous image. The same thing occurs when the user rotates his or her head in the opposite direction. Since the headgear 34 measures rotation of the user's head about horizontal X axis 40 as well, image generator 54 may display different vertical portions of image 70 depending on the rotational position of the user's head about axis 40 as shown in Figure 4.

In the preferred embodiment, the separate images displayed on display screens 18 and 22 are not exactly the same. Instead, they are offset in order to provide a stereo (depth) effect. For example, as shown in Fig. 5, the portion of the image from ADDR(N) through ADDR(M+N) may be displayed to the user's left eye on display screen 22, while the portion of the image from ADDR(N+1) through ADDR(M+N+1) may be displayed to the user's right eye on display screen 18. Preferably, the images are offset by an integral number of graphical characters. The amount of separation may be set to control the perceived depth of the image. The further apart the images are, the closer the perceived image.

The foregoing may be extended to the maintenance of multiple images in one or more data bases for the generation of superimposed cylinder worlds. As shown in Fig. 6, multiple images may be superimposed where the offset for one image differs from the offset of another image. The image having the greater offset will appear closer. The composite image will appear three-dimensional, but without using a three-dimensional data base or three-dimensional graphics processing.

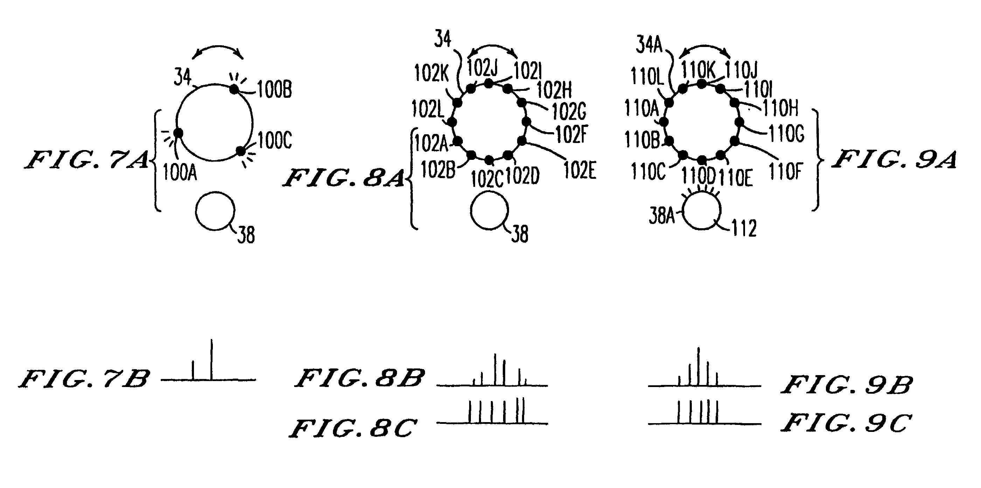

Figures 7A, 7B, 8A, 8B, 8C, 9A and 9B show various embodiments of those portions of headgear 34 used for measuring rotation about Z axis 42. Figure 7A shows an embodiment wherein a plurality, e.g., three radiation emitters 100(A-C) encircle the user's head, preferably in a common plane. Each radiation emitter may emit radiation at different frequencies, or else the individual radiation emitters may be selectively turned on and off so that the identity of the emitters may be ascertained using sensor 38 which is disposed generally perpendicular to the vertical axis of rotation. In the embodiment shown in Figure 7A, sensor 38 senses the intensity of radiation received from radiation emitters 100, 102 and 104 to determine which radiation emitter is in view of sensor 38 and which radiation emitter is closest to sensor 38. As shown in Figure 7B, the intensity of radiation received from radiation emitter 100 is less than the intensity of radiation received from emitter 102, and no radiation is sensed from emitter 104. This data may be used to calculate the rotational position of the user's head about Z axis 42.

Figures 8A, 8B and 8C show another embodiment of headgear 34 wherein numerous radiation emitters 102A-L encircle the user's head. This device may operate the same way as the device shown in Figure 7A wherein the identity of and intensity from the various radiation emitters are used to calculate the rotational position of the user's head. Alternatively, since many radiation emitters are disposed about the user's head, the rotational position of the user's head may be accurately ascertained merely by identifying which radiation emitter is in view.

Figures 9A, 9B, and 9C show another embodiment of a rotation measuring device similar to the device shown in Figure 8A, except a plurality of radiation sensors encircle the user's head for sensing radiation from a single radiation emitter 112. As shown in Figure 9B, the intensity of radiation received by each sensor together with its identity may be used to ascertain the rotational position of the user's head. Alternatively, as in the embodiment shown in Figure 8A, the rotational position of the user's head may be ascertained by the identity of sensors which receive any radiation at all from emitter 38A as shown in Figure 9C.

In all embodiments the rotational velocity of the user's head may be measured by the rate of change in amplitude of the sensed radiation or by the rate of change of the identified sensors. Alternatively, force-sensitive resistors may be used to measure torque and hence acceleration and velocity. Backup sensors (e.g., in the form of additional radiation emmiters and sensors) may be employed to prevent false indications of motion or no motion under constant acceleration conditions.

The same schemes may be used to calculate the rotational position and velocity of the user's head about X axis 40. However, in this embodiment a pitch sensor 120 is used to measure the degree of pitch of the user's head. Pitch sensor 120 may comprise a conventional bead sensor which employs gravity to measure the degree of pitch, or some other well-known pitch sensor.

While the above is a complete description of a preferred embodiment of the present invention, various modifications may be employed. For example, any body part of the user may be used to control scrolling of the image (such as the user's hand). Consequentially, the scope of the invention should be ascertained by the following claims.

## Claims

1. An apparatus for displaying a virtual world comprising:
image storing means (56) for storing image data representing an image having only two dimensions and which extends along only first and second generally perpendicular image axes;
movement measuring means (58) for measuring movement of a body part of a user and generating corresponding user data;
a display screen (18) mounted for movement with the user's head in front of at least one of the user's eyes; and
image generating means (54), electrically coupled to the image storing means, to the movement measuring means, and to the display screen, for generating an image to be displayed on the display screen by determining a portion of the image data stored in the image storage means to be displayed using the user data which varies only in two dimensions measured by the movement measuring means.

2. The apparatus according to claim 1 wherein the movement measuring means comprises rotation measuring means for measuring rotation of the user's body part, and wherein the image generating means generates the image to be displayed by translating the portion of the image data by an amount proportional to the amount of rotation of the user's body part.

3. The apparatus according to claim 2 wherein the first axis is a horizontal axis and the second axis is a vertical axis, and wherein the image generating means generates the image to be displayed by translating the portion of the image data along the horizontal axis by an amount proportional to the amount of rotation of the user's body part.

4. The apparatus according to claim 2 wherein the rotation measuring means comprises vertical head rotation measuring means for measuring the amount of rotation of the user's head about the vertical axis, so that the image generating means translates the portion of the image data along the horizontal axis by an amount proportional to the amount of rotation of the user's head about the vertical axis.

5. The apparatus according to claim 4 wherein the rotation means further comprises horizontal head rotation measuring means for measuring the amount of rotation of the user's head about the horizontal axis, and wherein the image generating means generates the image to be displayed by translating a portion of the image data along the vertical axis by an amount proportional to the amount of rotation of the user's head about the horizontal axis.

6. The apparatus according to claim 2, 3, 4 or 5, wherein the image has a start point and an end point along the first axis, and wherein the image generating means couples the start point to the end point when generating the image so that a continuous 360 degree image is displayed to the user as the user's body part rotates about the second axis.

7. The apparatus according to claim 6 wherein the first axis is a horizontal axis and the second axis is a vertical axis, and wherein the image generating means generates the image to be displayed by translating the portion of the image data along the horizontal axis by an amount proportional to the amount of rotation of the user's body part about the vertical axis.

8. The apparatus according to claim 7 wherein the rotation measuring means comprises vertical head rotation measuring means for measuring the amount of rotation of the user's head about the vertical axis, so that the portion of the image data is translated along the horizontal axis by an amount proportional to the amount of rotation of the user's head about the vertical axis.

9. The apparatus according to claim 8 wherein the rotation means further comprises horizontal head rotation measuring means for measuring the amount of rotation of the user's head about the horizontal axis, and wherein the image generating means generates the image to be displayed by translating the portion of the image data along the vertical axis by an amount proportional to the amount of rotation of the user's head about the horizontal axis.

10. The apparatus according to any one of the preceding claims wherein the image storing means stores the image data as a two-dimensional representation of the image comprising multi-pixel blocks of graphical characters.

11. The apparatus of claims 1, further comprising:
a second display screen (22) mounted for movement with the user's head, the first display screen being disposed in front of a first one of the user's eyes, and the second display screen being disposed in front of a second one of the user's eyes; and
wherein the image generating means are electrically coupled to the first display screen, and to the second display screen, for generating a first image to be displayed on the first and second display screens by determining a portion of the image data stored in the image storing means to be displayed on the first and second display screens using the user data which varies only in two dimensions measured by the movement measuring means.

12. The apparatus according to claim 11 wherein the first image generated on the first display screen is offset from the first image generated on the second display screen.

13. The apparatus according to claim 12 wherein the image storing means stores the image data as a two-dimensional image comprising multi-pixel blocks of graphical characters, and wherein the first image generated on the first display screen is offset along the first axis from the first image generated on the second display screen by a first selected number of graphical characters.

14. The apparatus according to claim 13 wherein the image storing means additionally stores image data representing a second image which extends along the first and second image axes, wherein the image generating means generates a second image to be displayed on the first and second display screens using the user data which varies only for the first and second image axes, the second image being superimposed on the first image, and wherein the second image generated on the first display screen is offset from the second image generated on the second display screen by a second selected number of graphical characters, the second number being different from the first number.

15. The apparatus according to claim 14 wherein the image generating means generates the image to be displayed by translating the portion of the second image on the first and second display screens along one of the first or second image axes by an amount proportional to an amount of movement of the user's body part.

16. The apparatus according to claim 14 or 15 wherein the image storing means stores a bit map of a third image, wherein the image generating means generates the third image on the first and second display screens and superimposes the third image on at least one of the first and second images, and wherein the third image generated on the first display screen is offset along the first axis from the third image generated on the second display screen by a selected number of pixels.

17. A method for displaying a virtual world comprising the steps of:
storing image data representing an image having only two dimensions and which extends along only first and second generally perpendicular image axes;
measuring movement of a body part of a user and generating corresponding user data;
mounting a display screen (18) for movement with the user's head in front of at least one of the user's eyes; and
generating an image on the display screen by determining a portion of the image data stored by the storing image data step which is to be displayed using the user data which varies only in two dimensions measured by the measuring step.

18. The method according to claim 16 or 17 wherein the movement measuring step comprises the step of measuring rotation of the user's body part, and wherein the image generating step comprises the step of generating the image by translating the portion of the image data by an amount proportional to the amount of rotation of the user's body part.

19. The method according to claim 18 wherein the first axis is a horizontal axis and the second axis is a vertical axis, and wherein the image generating step further comprises the step of generating the image by translating the portion of the image data along the horizontal axis by an amount proportional to the amount of rotation of the user's body part.

20. The method according to claim 19 wherein the rotation measuring step further comprises the step of measuring the amount of rotation of the user's head about the vertical axis, and wherein the image generating step further comprises the step of generating the image by translating the portion of the image data along the horizontal axis by an amount proportional to the amount of rotation of the user's head.

21. The method according to claim 20 wherein the rotation measuring step further comprises the step of measuring the amount of rotation of the user's head about the horizontal axis, and wherein the image generating step comprises the step of generating the image by translating the portion of the image data along the vertical axis by an amount proportional to the amount of rotation of the user's head about the horizontal axis.

22. The method according to claim 18, 19, 20 or 21 wherein the image has a start point and an end point along the first axis, and wherein the image generating step further comprises the step of coupling the start point to the end point when generating the image so that a continuous 360 degree image is displayed to the user as the user's body part rotates about the second axis.

23. The method according to claim 22 wherein the first axis is a horizontal axis and the second axis is a vertical axis, and wherein the image generating step further comprises the step of generating the image by translating the portion of the image data along the horizontal axis by an amount proportional to the amount of rotation of the user's body part.

24. The method according to claim 23 wherein the rotation measuring step comprises the step of measuring the amount of rotation of the user's head about the vertical axis, and wherein the image generating step further comprises the step of generating the image by translating the portion of the image data along the horizontal axis by an amount proportional to the amount of rotation of the user's head about the vertical axis.

25. The method according to claim 24 wherein the rotation measuring step further comprises the step of measuring the amount of rotation of the user's head about the horizontal axis, and wherein the image generating step further comprises the step of generating the image by translating the portion of the image data along the vertical axis by an amount proportional to the amount of rotation of the user's head about the horizontal axis.

26. The method according to any one of claims 17 to 25 wherein the image storing step comprises the step of storing the image data as a two-dimensional representation of the image comprising multi-pixel blocks of graphical characters.

27. The method according to any one of claims 17 to 26 further comprising:
mounting a second display screen (22) for movement with the user's head, the first display screen being disposed in front of a first one of the user's eyes, and the second display screen being disposed in front of a second one of the user's eyes.

28. The method according to claim 27 wherein the first image to be displayed on the first display screen is offset from the first image generated to be displayed on the second display screen.

29. The method according to claim 28 wherein the image storing step comprises the step of storing the image data as a two-dimensional image comprising multi-pixel blocks of graphical characters, and wherein the first image to be displayed on the first display screen is offset from the first image to be displayed on the second display screen by a first selected number of graphical characters.

30. The method according to claim 29 wherein the image storing step further comprises the step of additionally storing image data representing a second image which extends along the first and second image axes, wherein the image generating step further comprises the step of generating a second image to be displayed on the first and second display screens by determining a portion of the image data representing the second image to be displayed using the user data which varies only for the first and second image axes, the second image being superimposed on the first image, wherein the second image to be displayed on the first display screen is offset from the second image to be displayed on the second display screen by a second selected number of graphical characters, the second number being different from the first number, and wherein the displaying step displays both the first and second images to be displayed.

31. The method according to claim 30 wherein the image generating means generates the image to be displayed by translating the portion of the second image on the first and second display screens being translated along one of the first or second image axes by an amount proportional to an amount of movement of the user's body part.

32. The method according to claim 30 or 31 wherein the image storing step further comprises the step of storing a bit map of a third image, wherein the image generating step further comprises the step of generating a third image to be displayed on the first and second display screens by superimposing the third image on at least one of the first and second images, and wherein the third image generated on the first display screen is offset along the first axis from the third image generated on the second display screen by a selected number of pixels, and the displaying step further comprises displaying the third image.

## Patentansprüche

1. Vorrichtung für das Anzeigen einer virtuellen Welt, die aufweist:
eine Bildablageeinrichtung (56) für das Ablegen von Bilddaten, die ein Bild mit nur zwei Dimensionen darstellen und das sich nur entlang einer ersten und einer zweiten Bildachse erstreckt, die normalerweise senkrecht zueinander sind,
eine Bewegungsmeßeinrichtung (58) für das Messen der Bewegung eines Körperteils eines Benutzers und für das Erzeugen entsprechender Benutzerdaten,
einen Anzeigeschirm (18), der vor zumindest einem der Augen des Benutzers montiert ist und sich mit dem Kopf des Benutzers bewegt und
eine Bilderzeugungseinrichtung (54), die elektrisch mit der Bildablageeinrichtung, der Bewegungsmeßeinrichtung und dem Anzeigeschirm verbunden ist, für das Erzeugen eines auf dem Anzeigeschirm darzustellenden Bildes durch Bestimmen eines Teils bzw. eines Abschnitts der Bilddaten, die in der Bildablageeinrichtung abgelegt sind, der dargestellt werden soll unter Verwendung der Benutzerdaten, die nur in zwei Dimensionen variieren und von der Bewegungsmeßeinrichtung gemessen wurden.

2. Vorrichtung nach Anspruch 1, in der die Bewegungsmeßeinrichtung eine Rotationsmeßeinrichtung aufweist für das Messen der Rotation bzw. Drehbewegung des Körperteils des Benutzers und in der die Bilderzeugungseinrichtung das darzustellende Bild erzeugt durch Verschieben des Abschnitts der Bilddaten um eine Größee, die proportional zu der Größe der Rotation des Körperteils des Benutzers ist.

3. Vorrichtung nach Anspruch 2, in der die erste Achse eine horizontale Achse und die zweite Achse eine vertikale Achse ist und in der die Bilderzeugungseinrichtung das darzustellende Bild erzeugt durch Verschieben des Abschnitts der Bilddaten entlang der horizontalen Achse um eine Größe, die proportional zu der Größe der Rotation des Körperteils des Benutzers ist.

4. Vorrichtung nach Anspruch 2, in der die Rotationsmeßeinrichtung eine Meßeinrichtung für die vertikale Kopfrotation aufweist für das Messen der Größe der Rotation bzw. Drehbewegung des Kopfes des Benutzers um die vertikale Achse, so daß die Bilderzeugungseinrichtung den Abschnitt der Bilddaten entlang der horizontalen Achse um eine Größe verschiebt, die proportional zu der Größe der Drehbewegung des Kopfes des Benutzers um die vertikale Achse ist.

5. Vorrichtung nach Anspruch 4, in der die Rotationsmeßeinrichtung weiterhin eine Meßeinrichtung für die horizontale Kopfrotation aufweist für das Messen der Größe der Drehbewegung des Kopfes des Benutzers um die horizontale Achse und wobei die Bilderzeugungseinrichtung das darzustellende Bild erzeugt durch Verschieben eines Abschnitts der Bilddaten entlang der vertikalen Achse um eine Größe, die proportional zu der Größe der Drehbewegung des Kopfes des Benutzers um die horizontale Achse ist.

6. Vorrichtung nach einem der Ansprüche 2, 3, 4 oder 5, wobei das Bild einen Startpunkt und einen Endpunkt auf einer ersten Achse hat und wobei die Bilderzeugungseinrichtung den Startpunkt mit dem Endpunkt verbindet, wenn das Bild erzeugt wird, so daß ein kontinuierliches 360°-Bild dem Benutzer dargestellt wird, wenn das Körperteil des Benutzers um die zweite Achse rotiert.

7. Vorrichtung nach Anspruch 6, in der die erste Achse eine horizontale Achse ist und die zweite Achse eine vertikale Achse ist und wobei die Bilderzeugungseinrichtung das darzustellende Bild erzeugt durch Verschieben des Abschnitts der Bilddaten entlang der horizontalen Achse um eine Größe, die proportional zu der Größe der Drehbewegung des Körperteils des Benutzers um die vertikale Achse ist.

8. Vorrichtung nach Anspruch 7, in der die Rotationsmeßeinrichtung eine Meßeinrichtung für die vertikale Kopfrotation aufweist für das Messen der Größe der Drehbewegung des Kopfes des Benutzers um die vertikale Achse, so daß der Abschnitt der Bilddaten entlang der horizontalen Achse verschoben wird um eine Größe, die proportional zu der Größe der Drehbewegung des Kopfes des Benutzers um die vertikale Achse ist.

9. Vorrichtung nach Anspruch 8, in der die Rotationsmeßeinrichtung weiterhin eine Meßeinrichtung für die horizontale Kopfdrehbewegung aufweist für das Messen der Größe der Drehbewegung des Kopfes des Benutzers um die horizontale Achse und wobei die Bilderzeugungseinrichtung das darzustellende Bild erzeugt durch Verschieben des Abschnitts der Bilddaten entlang der vertikalen Achse um eine Größe, die proportional zu der Größe der Drehbewegung des Kopfes des Benutzers um die horizontale Achse ist.

10. Vorrichtung nach einem der vorherigen Ansprüche, in dem die Bildablageeinrichtung die Bilddaten als eine zweidimensionale Darstellung des Bildes ablegt, die Multi-Pixel-Blöcke von graphischen Zeichen bzw. Schriftzeichen aufweist.

11. Vorrichtung nach Anspruch 1, die weiterhin aufweist:
einen zweiten Anzeigeschirm (22), der montiert ist, damit er sich mit dem Kopf des Benutzers bewegt, wobei der erste Anzeigeschirm vor einem ersten Auge des Benutzers angeordnet ist und der zweite Anzeigeschirm vor einem zweiten Auge des Benutzers angeordnet ist und
wobei die Bilderzeugungseinrichtung elektrisch mit dem ersten Anzeigeschirm und mit dem zweiten Anzeigeschirm verbunden ist für das Erzeugen eines auf dem ersten und zweiten Anzeigeschirm darzustellenden ersten Bildes durch Bestimmen eines Abschnitts der Bilddaten, die in der Bildablageeinrichtung abgelegt sind, der auf dem ersten und zweiten Anzeigeschirm dargestellt werden soll unter Verwendung der Benutzerdaten, die nur in zwei Dimensionen variieren und durch die Bewegungsmeßeinrichtung gemessen werden.

12. Vorrichtung nach Anspruch 11, in der das erste Bild, das auf dem ersten Anzeigeschirm erzeugt wird gegenüber dem ersten Bild, das auf dem zweiten Anzeigeschirm erzeugt wird, versetzt ist.

13. Vorrichtung nach Anspruch 12, in der die Bildablageeinrichtung die Bilddaten als ein zweidimensionales Bild ablegt, das Multi-Pixel-Blöcke von graphischen Zeichen aufweist, und wobei das erste Bild, das auf dem ersten Anzeigeschirm erzeugt wird entlang der ersten Achse um eine erste ausgewählte Anzahl von graphischen Zeichen gegenüber dem ersten Bild, das auf dem zweiten Anzeigeschirm erzeugt wird, versetzt ist.

14. Vorrichtung nach Anspruch 13, in der die Bildablageeinrichtung zusätzlich Bilddaten ablegt, die ein zweites Bild darstellen, das sich entlang der ersten und zweiten Bildachse erstreckt, wobei die Bilderzeugungseinrichtung ein zweites Bild erzeugt, das auf dem ersten und zweiten Anzeigeschirm dargestellt werden soll, unter Verwendung der Benutzerdaten, die nur für die erste und zweite Bildachse variieren, wobei das zweite Bild dem ersten Bild überlagert wird und wobei das zweite Bild, das auf dem ersten Anzeigeschirm erzeugt wird, gegenüber dem zweiten Bild, das auf dem zweiten Anzeigeschirm erzeugt wird, um eine zweite ausgewählte Anzahl von graphischen Zeichen versetzt ist, wobei die zweite Anzahl sich von der ersten Anzahl unterscheidet.

15. Vorrichtung nach Anspruch 14, in der die Bilderzeugungseinrichtung das darzustellende Bild durch Verschieben des Abschnitts des zweiten Bildes auf dem ersten und zweiten Anzeigeschirm entlang einer, der ersten oder der zweiten Bildachse um eine Größe, die proportional zu der Größe der Bewegung des Körperteils des Benutzers ist, erzeugt.

16. Vorrichtung nach Anspruch 14 oder 15, in der die Bildspeichereinrichtung eine Bitmap eines dritten Bildes ablegt, wobei die bilderzeugende Einrichtung das dritte Bild auf dem ersten und dem zweiten Anzeigeschirm erzeugt und das dritte Bild zumindest einem, dem ersten oder dem zweiten, Bild überlagert, und wobei das dritte Bild, das auf dem ersten Anzeigeschirm erzeugt wird, entlang der ersten Achse um eine ausgewählte Anzahl von Pixeln gegenüber dem dritten Bild, das auf dem zweiten Anzeigeschirm erzeugt wird, verschoben ist.

17. Verfahren für das Anzeigen einer virtuellen Welt, das die Schritte aufweist:
Ablegen bzw. Speichern von Bilddaten, die ein Bild darstellen mit nur zwei Dimensionen und das sich nur entlang einer ersten und zweiten Bildachse erstreckt, die normalerweise senkrecht aufeinander stehen,
Messen der Bewegung eines Körperteils eines Benutzers und Erzeugen der entsprechenden Benutzerdaten,
Anordnen bzw. Montieren eines Anzeigeschirms (18) vor zumindest einem Auge des Benutzers für die Bewegung mit dem Kopf des Benutzers, und
Erzeugen eines Bildes auf dem Anzeigeschirm durch Bestimmen eines Abschnitts bzw. Teils der Bilddaten, die in dem Bilddatenablageschritt gespeichert wurden, der unter Verwendung der Benutzerdaten angezeigt werden soll, die nur in zwei Dimensionen variieren und während des Meßschrittes gemessen wurden.

18. Verfahren nach Anspruch 17, wobei der Bewegungsmeßschritt den Schritt des Messens der Drehbewegung des Körperteils des Benutzers aufweist und wobei der bilderzeugende Schritt den Schritt des Erzeugens des Bildes durch Verschieben des Abschnitts bzw. Teils der Bilddaten um eine Größe aufweist, die proportional zu der Größe der Drehbewegung des Körperteils des Benutzers ist.

19. Verfahren nach Anspruch 18, wobei die erste Achse eine horizontale Achse und die zweite Achse eine vertikale Achse ist und wobei der Bilderzeugungsschritt weiterhin den Schritt aufweist des Erzeugens des Bildes durch Verschieben des Abschnitts der Bilddaten entlang der horizontalen Achse um eine Größe, die proportional zu der Größe der Drehbewegung des Körperteils des Benutzers ist.

20. Verfahren nach Anspruch 19, bei dem Drehbewegungsmeßschritt weiterhin den Schritt aufweist des Messens der Größe der Drehbewegung des Kopfes des Benutzers um die vertikale Achse und wobei der bilderzeugende Schritt weiterhin den Schritt des Erzeugens des Bildes durch Verschieben des Abschnitts der Bilddaten entlang der horizontalen Achse um eine Größe aufweist, die proportional zu der Größe der Drehbewegung des Kopfes des Benutzers ist.

21. Verfahren nach Anspruch 20, bei dem der Drehbewegungsmeßschritt weiterhin den Schritt des Messens der Größe der Drehbewegung des Kopfes des Benutzers um die horizontale Achse aufweist und bei dem der bilderzeugende Schritt den Schritt des Erzeugens des Bildes durch Verschieben des Abschnitts der Bilddaten entlang der vertikalen Achse um eine Größe aufweist, die proportional zu der Größe der Drehbewegung des Kopfes des Benutzers um die horizontale Achse ist.

22. Verfahren nach einem der Ansprüche 18, 19, 20 oder 21, wobei das Bild einen Startpunkt und einen Endpunkt entlang der ersten Achse hat und wobei der bilderzeugende Schritt weiterhin den Schritt aufweist des Verbindens des Startpunktes mit dem Endpunkt, wenn das Bild erzeugt wird, so daß ein kontinuierliches 360°-Bild dem Benutzer angezeigt wird, wenn das Körperteil des Benutzers sich um die zweite Achse dreht.

23. Verfahren nach Anspruch 22, in dem die erste Achse eine horizontale Achse und die zweite Achse eine vertikale Achse ist und in dem der bilderzeugende Schritt weiterhin den Schritt aufweist des Erzeugens des Bildes durch Verschieben des Abschnitts der Bilddaten entlang der horizontalen Achse um eine Größe, die proportional zu der Größe der Drehbewegung des Körperteils des Benutzers ist.

24. Verfahren nach Anspruch 23, in dem der Rotationsmeßschritt den Schritt des Messens der Größe der Drehbewegung des Kopfes des Benutzers um die vertikale Achse aufweist und wobei der bilderzeugende Schritt weiterhin den Schritt des Erzeugens des Bildes durch Verschieben des Abschnitts bzw. Teils der Bilddaten entlang der horizontalen Achse um eine Größe aufweist, die proportional zu der Größe der Drehbewegung des Kopfes des Benutzers um die vertikale Achse ist.

25. Verfahren nach Anspruch 24, in dem der Rotationsmeßschritt weiterhin den Schritt des Messens der Größe der Drehbewegung des Kopfes des Benutzers um die horizontale Achse aufweist und wobei der bilderzeugende Schritt weiterhin den Schritt des Erzeugens des Bildes durch Verschieben des Abschnitts der Bilddaten entlang der vertikalen Achse um eine Größe aufweist, die proportional zu der Größe der Drehbewegung des Kopfes des Benutzers um die horizontale Achse ist.

26. Verfahren nach einem der Ansprüche 17 bis 25, in dem der Bildablageschritt den Schritt des Speicherns der Bilddaten als eine zweidimensionale Darstellung des Bildes mit Multi-Pixel-Blöcken von graphischen Zeichen aufweist.

27. Verfahren nach einem der Ansprüche 17 bis 26, das weiterhin aufweist:
Montieren bzw. Ausrichten eines zweiten Anzeigeschirms (22) für die gemeinsame Bewegung mit dem Kopf des Benutzers, wobei der erste Anzeigeschirm vor einem ersten Auge des Benutzers angeordnet wird und der zweite Anzeigeschirm vor einem zweiten Auge des Benutzers angeordnet wird.

28. Verfahren nach Anspruch 27, in dem das auf dem ersten Anzeigeschirm anzuzeigende erste Bild gegenüber dem auf dem zweiten Anzeigeschirm anzuzeigenden ersten Bild verschoben ist.

29. Verfahren nach Anspruch 28, in dem der bildablegende Schritt den Schritt des Ablegens der Bilddaten als ein zweidimensionales Bild mit Multi-Pixel-Blöcken von graphischen Zeichen aufweist und wobei das auf dem ersten Anzeigeschirm anzuzeigende erste Bild gegenüber dem auf dem zweiten Anzeigeschirm anzuzeigenden ersten Bild um eine erste ausgewählte Anzahl von graphischen Zeichen verschoben ist.

30. Verfahren nach Anspruch 29, in dem der Bildablageschritt weiterhin den Schritt des zusätzlichen Ablegens von Bilddaten, die ein zweites Bild darstellen, aufweist, das sich entlang der ersten und zweiten Bildachse erstreckt, wobei der bilderzeugende Schritt weiterhin den Schritt des Erzeugens eines auf dem ersten und zweiten Anzeigeschirm anzuzeigenden zweiten Bildes aufweist durch Bestimmen eines Abschnitts der Bilddaten, die das anzuzeigende zweite Bild darstellen, unter Verwendung der Benutzerdaten, die nur für die erste und zweite Bildachse variieren, wobei das zweite Bild dem ersten Bild überlagert wird, wobei das auf dem ersten Anzeigeschirm darzustellende zweite Bild gegenüber dem auf dem zweiten Anzeigeschirm darzustellenden zweiten Bild um eine zweite ausgewählte Anzahl von graphischen Zeichen verschoben ist, wobei die zweite Anzahl sich von der ersten Anzahl unterscheidet und wobei der Anzeigeschritt sowohl das anzuzeigende erste als auch das anzuzeigende zweite Bild darstellt.

31. Verfahren nach Anspruch 30, bei dem die Bilderzeugungseinrichtung das darzustellende Bild erzeugt durch Verschieben des Abschnitts des zweiten Bildes auf dem ersten und zweiten Anzeigeschirm, das entlang einer, der ersten oder zweiten, Bildachse um eine Größe, die proportional zu der Größe der Bewegung des Körperteils des Benutzers ist, verschoben wird.

32. Verfahren nach Anspruch 30 oder 31, wobei der Bildablageschritt weiterhin den Schritt des Ablegens einer Bitmap eines dritten Bildes aufweist, wobei der Bilderzeugungsschritt weiterhin den Schritt des Erzeugens eines auf dem ersten und zweiten Anzeigeschirm anzuzeigenden dritten Bildes aufweist durch Überlagern des dritten Bildes auf zumindest einem, dem ersten oder dem zweiten, Bild, und wobei das dritte Bild, das auf dem ersten Anzeigeschirm erzeugt wird, gegenüber dem dritten Bild, das auf dem zweiten Anzeigeschirm erzeugt wird, um eine ausgewählte Anzahl von Pixeln entlang der ersten Achse verschoben ist, und der Anzeigeschritt weiterhin das Anzeigen des dritten Bildes aufweist.

## Revendications

1. Appareil destiné à visualiser un monde virtuel comprenant :
un moyen de stockage d'image (56) pour stocker les données d'image représentant une image ayant seulement deux dimensions et qui se prolonge seulement le long d'un premier et d'un second axe d'image généralement perpendiculaires ;
un moyen de mesure de mouvements (58) destiné à mesurer les mouvements d'une partie du corps d'un utilisateur et à engendrer des données d'utilisateurs correspondantes ;
un écran de visualisation (18) monté de telle sorte à se déplacer avec la tête de l'utilisateur afin d'être en face d'au moins un des yeux de l'utilisateur ; et
un moyen de génération d'image (54), relié électriquement au moyen de stockage d'image, au moyen de mesure de mouvement, et à un écran de visualisation, de telle sorte à engendrer une image devant être affichée sur l'écran de visualisation en déterminant une partie des données d'image stockées dans le moyen de stockage de l'image devant être affichée en utilisant les données de l'utilisateur qui varient seulement dans deux dimensions mesurées par le moyen de mesure de mouvement.

2. Appareil selon la revendication 1 dans lequel le moyen de mesure de mouvements comprend un moyen de mesure de la rotation de telle sorte à mesurer la rotation de la partie du corps de l'utilisateur, et dans lequel le moyen de génération d'image engendre une image devant être affichée en déplaçant par translation la partie des données d'image d'une quantité proportionnelle à la quantité de rotation de la partie du corps de l'utilisateur.

3. Appareil selon la revendication 2 dans lequel le premier axe est un axe horizontal et le second axe est un axe vertical, et dans lequel le moyen de génération d'image engendre l'image devant être affichée en déplaçant par translation la partie de données d'image le long de l'axe horizontal d'une quantité proportionnelle à la quantité de rotation de la partie du corps de l'utilisateur.

4. Appareil selon la revendication 2 dans lequel le moyen de mesure de rotation comprend un moyen de mesure de la rotation verticale de la tête destiné à mesurer la quantité de mouvement de la tête de l'utilisateur par rapport à l'axe vertical, de telle sorte que le moyen de génération d'image déplace par translation la partie des données d'image le long de l'axe horizontal d'une quantité proportionnelle à la quantité de rotation de la tête de l'utilisateur le long de l'axe vertical.

5. Appareil selon la revendication 4 dans lequel le moyen de rotation comprend de plus un moyen de mesure de la rotation horizontale de la tête destiné à mesurer la quantité de mouvement de la tête de l'utilisateur par rapport à l'axe horizontal, et dans lequel le moyen de génération d'image engendre l'image devant être affichée en déplaçant par translation une partie de données d'image le long de l'axe vertical d'une quantité proportionnelle à la quantité de rotation de la tête de l'utilisateur par rapport à l'axe horizontal.

6. Appareil selon les revendications 2, 3, 4 ou 5, dans lequel l'image comporte un point de départ et un point d'arrivée le long du premier axe, et dans lequel le moyen de génération d'image associe le point de départ au point d'arrivée lors de la génération de l'image de telle sorte qu'une image continue sur 360 degrés soit affichée à l'utilisateur lorsque la partie du corps de l'utilisateur tourne par rapport au second axe.

7. Appareil selon la revendication 6 dans lequel le premier axe est un axe horizontal et le second axe est un axe vertical, et dans lequel le moyen de génération d'image engendre l'image devant être affichée en déplaçant par translation la partie de données d'image le long de l'axe horizontal d'une quantité proportionnelle à la quantité de rotation de la partie du corps de l'utilisateur par rapport à l'axe vertical.

8. Appareil selon la revendication 7 dans lequel le moyen de mesure de rotation comprend un moyen de mesure de la rotation verticale de la tête destiné à mesurer la quantité de rotation de la tête de l'utilisateur par rapport à l'axe vertical, de telle sorte que la partie de données d'image soit déplacée par translation le long de l'axe horizontal d'une quantité proportionnelle à la quantité de rotation de la tête de l'utilisateur par rapport à l'axe vertical.

9. Appareil selon la revendication 8 dans lequel le moyen de rotation comprend de plus un moyen de mesure de la rotation horizontale de la tête destiné à mesurer la quantité de rotation de la tête de l'utilisateur par rapport à l'axe horizontal, et dans lequel le moyen de génération d'image engendre l'image devant être affichée en déplaçant par translation la partie de données d'image le long de l'axe vertical d'une quantité proportionnelle à la quantité de rotation de la tête de l'utilisateur par rapport à l'axe horizontal.

10. Appareil selon l'une quelconque des précédentes revendications dans lequel le moyen de stockage d'image stocke les données d'image comme une représentation bidimensionnelle de l'image comprenant des blocs multi pixels de caractères graphiques.

11. Appareil de la revendication 1, comprenant de plus :
un second écran de visualisation (22) monté de telle sorte à se déplacer avec la tête de l'utilisateur, le premier écran de visualisation étant placé devant le premier oeil de l'utilisateur, et le second écran de visualisation étant placé devant le second oeil de l'utilisateur ; et
dans lequel le moyen de génération d'image est associé électriquement au premier écran de visualisation, et au second écran de visualisation, de telle sorte à engendrer une première image devant être affichée sur les premier et second écrans de visualisation en déterminant une partie des données d'image stockée dans le moyen de stockage de l'image devant être affichée sur les premier et le second écrans de visualisation en utilisant les données d'utilisateur qui varient uniquement en deux dimensions mesurées par le moyen de mesure de mouvement.

12. Appareil selon la revendication 11 dans lequel la première image engendrée sur le premier écran de visualisation est décalée par rapport à la première image engendrée sur le second écran de visualisation.

13. Appareil selon la revendication 12 dans lequel le moyen de stockage d'image stocke les données d'image en tant qu'image bidimensionnelle comprenant des blocs multi pixels de caractères graphiques, et dans lequel la première image engendrée sur le premier écran de visualisation est décalée d'une première quantité sélectionnée de caractères graphiques le long du premier axe par rapport à la première image engendrée sur le second écran de visualisation.

14. Appareil selon la revendication 13 dans lequel le moyen de stockage d'image stocke de façon additionnelle des données d'image représentant une seconde image qui se prolonge le long des premier et second axes d'image, dans lequel le moyen de génération d'image engendre une seconde image devant être affichée sur les premier et second écrans de visualisation en utilisant les données d'utilisateur qui varient seulement pour les premier et second axes d'image, la seconde image étant superposée sur la première image, et dans lequel la seconde image engendrée sur le premier écran de visualisation est décalée de la seconde image engendrée sur le second écran de visualisation d'une seconde quantité sélectionnée de caractères graphiques, la seconde quantité étant différente de la première quantité.

15. Appareil selon la revendication 14 dans lequel le moyen de génération d'image engendre l'image devant être affichée en déplaçant par translation la partie de la seconde image sur les premier et second écrans de visualisation le long de l'un des premier et second axes d'image d'une quantité proportionnelle à la quantité de mouvement de la partie du corps de l'utilisateur.

16. Appareil selon la revendication 14 ou 15 dans lequel le moyen de stockage d'image stocke une représentation binaire d'une troisième image, dans lequel le moyen de génération d'image engendre la troisième image sur les premier et second écrans de visualisation et superpose la troisième image sur au moins l'une des première et seconde images, et dans lequel la troisième image engendrée sur le premier écran de visualisation est décalée d'une quantité sélectionnée de pixels le long du premier axe par rapport à la troisième image engendrée sur le second écran de visualisation.

17. Procédé de visualisation d'un monde virtuel comprenant les étapes de :
stockage des données d'image représentant une image comportant seulement deux dimensions et qui se prolonge le long seulement d'un premier et second axes d'image généralement perpendiculaires ;
la mesure de mouvement d'une partie du corps de l'utilisateur et la génération des données d'utilisateur correspondantes ;
le montage d'un écran de visualisation (18) destiné à se déplacer avec la tête de l'utilisateur en face d'au moins l'un des yeux de l'utilisateur ; et
la génération d'une image sur l'écran de visualisation en déterminant une partie des données d'image stockées dans les étapes de stockage des données de l'image devant être affichée en utilisant les données d'utilisateur qui varient seulement selon deux dimensions mesurées lors de l'étape de mesure.

18. Procédé selon la revendication 16 ou 17 dans lequel l'étape de mesure de mouvement comprend l'étape de mesure de la rotation de la partie du corps de l'utilisateur, et dans lequel l'étape de génération d'image comprend l'étape de génération de l'image par déplacement de translation de la partie des données d'image selon une quantité proportionnelle à la quantité de rotation de la partie du corps de l'utilisateur.

19. Procédé selon la revendication 18 dans lequel le premier axe est un axe horizontal et le second axe est un axe vertical, et dans lequel l'étape de génération d'image comprend de plus l'étape de génération de l'image par déplacement de translation de la partie de données d'image le long de l'axe horizontal d'une quantité proportionnelle à la quantité de rotation de la partie du corps de l'utilisateur.

20. Procédé selon la revendication 19 dans lequel l'étape de mesure de rotation comprend de plus l'étape de mesure de la quantité de rotation de la tête de l'utilisateur par rapport à l'axe vertical, et dans lequel l'étape de génération d'image comprend de plus l'étape de génération de l'image par déplacement de translation de la partie de données d'image le long de l'axe horizontal d'une quantité proportionnelle à la quantité de rotation de la tête de l'utilisateur.

21. Procédé selon la revendication 20 dans lequel l'étape de mesure de rotation comprend de plus l'étape de mesure de la quantité de rotation de la tête de l'utilisateur par rapport à l'axe horizontal, et dans lequel l'étape de génération d'image comprend l'étape de génération de l'image par déplacement de translation de la partie de données d'image le long de l'axe vertical d'une quantité proportionnelle à la quantité de rotation de la tête de l'utilisateur par rapport à l'axe horizontal.

22. Procédé selon les revendications 18, 19, 20 et 21 dans lequel l'image comporte un point de départ et un point d'arrivée le long du premier axe, et dans lequel l'étape de génération d'image comprend de plus l'étape consistant à associer le point de départ et le point d'arrivée lors de la génération de l'image de telle sorte qu'une image continue sur 360 degrés soit affichée à l'utilisateur lorsque la partie du corps de l'utilisateur tourne par rapport au second axe.

23. Procédé selon la revendication 22 dans lequel le premier axe est un axe horizontal et le second axe est un axe vertical, et dans lequel l'étape de génération d'image comprend de plus l'étape de génération de l'image par déplacement de translation de la partie des données d'image le long de l'axe horizontal d'une quantité proportionnelle à la quantité de rotation de la partie du corps de l'utilisateur.

24. Procédé selon la revendication 23 dans lequel l'étape de mesure de rotation comprend l'étape de mesure de la quantité de rotation de la tête de l'utilisateur par rapport à l'axe vertical, et dans lequel l'étape de génération d'image comprend de plus l'étape de génération de l'image par déplacement de translation de la partie des données d'image le long de l'axe horizontal d'une quantité proportionnelle à la quantité de rotation de la tête de l'utilisateur par rapport à l'axe vertical.

25. Procédé selon la revendication 24 dans lequel l'étape de mesure de rotation comprend de plus l'étape de mesure de la quantité de rotation de la tête de l'utilisateur par rapport à l'axe horizontal, et dans lequel l'étape de génération d'image comprend de plus l'étape de génération de l'image par mouvement de translation de la partie des données d'image le long de l'axe vertical d'une quantité proportionnelle à la quantité de rotation de la tête de l'utilisateur par rapport à l'axe horizontal.

26. Procédé selon l'une quelconque des revendications 17 à 25 dans lequel l'étape de stockage de l'image comprend l'étape de stockage des données d'image selon une représentation bidimensionnelle de l'image comprenant des blocs multi-pixels de caractères graphiques.

27. Procédé selon l'une quelconque des revendications 17 à 26 comprenant de plus :
le montage d'un second écran de visualisation (22) pour se déplacer avec la tête de l'utilisateur, le premier écran de visualisation étant placé en face du premier oeil de l'utilisateur, et le second écran de visualisation étant placé en face du second oeil de l'utilisateur.

28. Procédé selon la revendication 27 dans lequel la première image devant être affichée sur le premier écran de visualisation est décalée par rapport à la première image engendrée destinée à être affichée sur le second écran de visualisation.

29. Procédé selon la revendication 28 dans lequel l'étape de stockage de l'image comprend l'étape de stockage des données d'image selon une image bidimensionnelle comprenant des blocs multi-pixels à caractères graphiques, et dans lequel la première image devant être affichée sur le premier écran de visualisation est décalée d'une première quantité sélectionnée de caractères graphiques par rapport à la première image devant être affichée sur le second écran de visualisation.

30. Procédé selon la revendication 29 dans lequel l'étape de stockage d'image comprend de plus l'étape de stockage additionnel des données d'image représentant une seconde image qui se prolonge le long des premier et second axes d'image, dans lequel l'étape de génération d'image comprend de plus l'étape de génération d'une seconde image devant être affichée sur les premier et second écrans de visualisation en déterminant la partie des données d'image représentant la seconde image devant être affichée en utilisant les données de l'utilisateur qui varient seulement pour les premier et second axes d'image, la seconde image étant superposée sur la première image, dans lequel la seconde image devant être affichée sur le premier écran de visualisation est décalée par rapport à la seconde image devant être affichée sur le second écran de visualisation d'une deuxième quantité sélectionnée de caractères graphiques, la seconde quantité étant différente de la première quantité, et dans lequel l'étape de visualisation montre à la fois les premières et seconde images devant être affichées.

31. Procédé selon la revendication 30 dans lequel le moyen de génération d'image engendre l'image devant être affichée par déplacement de translation de la partie de la seconde image sur les premier et second écrans de visualisation en étant déplacé par translation le long de l'un des premier et second axes d'image d'une quantité proportionnelle à la quantité de mouvement de la partie du corps de l'utilisateur.

32. Procédé selon les revendications 30 ou 31 dans lequel l'étape de stockage d'image comprend de plus l'étape de stockage d'une représentation binaire d'une troisième image, dans lequel l'étape de génération d'image comprend de plus l'étape de génération d'une troisième image devant être affichée sur les premier et second écrans de visualisation en superposant la troisième image sur au moins l'une des première et seconde images, et dans lequel la troisième image engendrée sur le premier écran de visualisation est décalée le long du premier axe à partir de la troisième image engendrée sur le second écran de visualisation d'une quantité sélectionnée de pixels, et l'étape de visualisation comprenant de plus l'affichage de la troisième image.
